# EUROPEAN PATENT APPLICATION

(11) **EP 4 631 832 A1**
(43) Date of publication of application: **15.10.2025**
(21) Application number: 25161387.3
(22) Date of filing: 03.03.2025
(51) Int. Cl.: B62D 25/20, B60K 1/04, B60N 2/015

(54) **VEHICLE LOWER-PORTION STRUCTURE**

(30) Priority: 09.04.2024 JP 2024062563
(71) Applicant: TOYOTA JIDOSHA KABUSHIKI KAISHA, Toyota-shi, Aichi-ken, 471-8571 (JP)
(72) Inventor: MOTOI, Daisuke, TOYOTA-SHI, AICHI-KEN, 471-8571 (JP); SHIGIHARA, Takayoshi, TOYOTA-SHI, AICHI-KEN, 471-8571 (JP); TAKASAWA, Hideki, TOYOTA-SHI, AICHI-KEN, 471-8571 (JP); YAMAMOTO, Yo, TOYOTA-SHI, AICHI-KEN, 471-8571 (JP); SAEKI, Koji, TOYOTA-SHI, AICHI-KEN, 471-8571 (JP); HIGASHIHARA, Katsunori, TOYOTA-SHI, AICHI-KEN, 471-8571 (JP); HAYASE, Jun, TOYOTA-SHI, AICHI-KEN, 471-8571 (JP)
(74) Representative: Cabinet Beau de Loménie

(57) **Abstract**

A vehicle lower-portion structure includes a battery case (12) disposed in a lower portion of a vehicle, the battery case accommodating a battery (BT), a crossmember (20) disposed on a vehicle upper side from the battery case (12), the crossmember (20) extending in a vehicle-width direction, a bracket (40) provided between the battery case (12) and the crossmember (20), the bracket (40) including a joining portion (40A) joined to an upper surface of the battery case (12) and a fastening portion (40B) having an insertion hole (41A), and a fastener (44) provided through the insertion hole (41A) to fix the crossmember (20) and the battery case (12).

## Description

### BACKGROUND OF THE INVENTION

### 1. Field of the Invention

The present invention relates to a vehicle lower-portion structure.

### 2. Description of Related Art

Chinese Patent Application Publication No. 114940214 (CN 114940214 A) discloses a vehicle lower-portion structure including a battery frame that surrounds a battery. Further, in the vehicle lower-portion structure described in CN 114940214 A, a cover plate that covers the battery from above is provided, and the cover plate configures a floor surface of a vehicle cabin.

### SUMMARY OF THE INVENTION

Incidentally, it is common to use a structure including a crossmember extending in a vehicle-width direction in order to transmit a collision load at the time of side collision, but, in a structure in which the cover plate of the battery case also serves as a floor panel as in the structure described in CN 114940214 A, the crossmember is fixed to the cover plate. However, when a hole is formed in the cover plate in order to directly fix the crossmember to the cover plate, the performance of the battery may be affected.

The present invention provides a vehicle lower-portion structure that allows the performance of a battery to be satisfactorily maintained in a structure including a crossmember extending in a vehicle-width direction.

A vehicle lower-portion structure according to a first aspect includes: a battery case disposed in a lower portion of a vehicle, the battery case accommodating a battery; a crossmember disposed on a vehicle upper side from the battery case, the crossmember extending in a vehicle-width direction; a bracket provided between the battery case and the crossmember, the bracket including a joining portion joined to an upper surface of the battery case and a fastening portion having an insertion hole; and a fastener provided through the insertion hole to fix the crossmember and the battery case.

In the vehicle lower-portion structure according to the first aspect, the battery case accommodating the battery is disposed in the lower portion of the vehicle. Further, on the vehicle upper side from the battery case, the crossmember extending in the vehicle-width direction is disposed. In this manner, a collision load input at the time of side collision of a vehicle (hereinafter referred to as "at the time of side collision" as appropriate) can be transmitted to a counter-collision side by the crossmember.

Further, the bracket is provided between the battery case and the crossmember. The bracket includes the joining portion joined to the upper surface of the battery case, and the fastening portion having the insertion hole. As described above, when the fastening portion is provided in the bracket, and the fastener is mounted to the fastening portion and inserted through the crossmember, it is not required to fasten the battery case and the crossmember directly with the fastener.

In the vehicle lower-portion structure according to the first aspect of the present disclosure, the fastening portion may protrude to the vehicle upper side from the joining portion, and the fastener may have a part disposed in a space between the fastening portion and the upper surface of the battery case.

In the above-mentioned vehicle lower-portion structure, a part of the fastener is provided in the space between the fastening portion and the upper surface of the battery case. Thus, the fastener can be prevented from coming off from the bracket, and the fastening state of the crossmember can be satisfactorily maintained.

In the vehicle lower-portion structure according to the first aspect of the present disclosure, the crossmember may have a closed sectional shape, and the crossmember may have a lower wall portion provided with a recessed portion at a position corresponding to the fastening portion.

In the above-mentioned vehicle lower-portion structure, the recessed portion is formed in the crossmember, and the fastening portion is caused to enter the recessed portion. Thus, a part of the crossmember other than the recessed portion can be caused to adhere to the bracket in surfaces.

In the vehicle lower-portion structure according to the first aspect of the present disclosure, the battery case may include a side surface extending to a vehicle lower side from both end portions of the upper surface in the vehicle-width direction, the bracket may extend in the vehicle-width direction, and an outer side of the bracket in the vehicle-width direction may bend along the side surface.

In the above-mentioned vehicle lower-portion structure, both end portions of the bracket in the vehicle-width direction are bent along the side surface of the battery case, and hence the bracket can reinforce the side surface of the battery case. It is to be noted that the phrase "bent along the side surface" used here is not limited to a configuration in which the bracket extends in parallel to the side surface of the battery case, and is a concept widely including a configuration in which a bending angle is different from an angle formed between the upper surface and the side surface of the battery case.

In the vehicle lower-portion structure according to the first aspect of the present disclosure, the battery case may include a flange extending from the side surface to an outer side in the vehicle-width direction, and the bracket may be joined to the flange.

In the above-mentioned vehicle lower-portion structure, the bracket extends up to the flange of the battery case, and hence the bracket can reinforce the battery case from the side surface to the flange.

In the vehicle lower-portion structure according to the first aspect of the present disclosure, a gap may be provided between the bracket and the side surface.

In the above-mentioned vehicle lower-portion structure, the bracket is deformed by the collision load input at the time of side collision such that the gap between the side surface of the battery case and the bracket collapses. Thus, at least a part of the collision load can be absorbed.

In the vehicle lower-portion structure according to the first aspect of the present disclosure, the upper surface of the battery case may configure a vehicle cabin floor portion.

In the above-mentioned vehicle lower-portion structure, the upper surface of the battery case configures the vehicle cabin floor portion. Thus, it is not required to separately provide a floor panel. As a result, as compared to a structure including a floor panel, the number of components and the number of assembly steps can be reduced.

In the vehicle lower-portion structure according to the first aspect of the present disclosure, the fastening portion may include a protrusion bead extending in the vehicle-width direction.

In the above-mentioned vehicle lower-portion structure, the protrusion bead increases the rigidity of the fastening portion, and the bracket can be preventing from buckling at the time of side collision.

In the vehicle lower-portion structure according to the first aspect of the present disclosure, the fastener may be a bolt including a head portion and a shaft portion, the head portion may be disposed in a space between the fastening portion and the upper surface of the battery case, and the shaft portion may be provided through the bracket and the crossmember.

In the above-mentioned vehicle lower-portion structure, the head portion of the bolt is disposed in the space between the fastening portion and the upper surface of the battery case. Thus, the bolt can be prevented from coming off. Further, the shaft portion of the bolt is provided through the bracket and the crossmember. Thus, the bracket and the crossmember can be sandwiched between the head portion of the bolt and the nut, and the bracket and the crossmember can be firmly fixed.

The vehicle lower-portion structure according to the first aspect of the present disclosure may further include a pair of right and left battery side frames provided on both sides of the battery case in the vehicle-width direction, the right and left battery side frames extending in a vehicle front-rear direction along the side surface, and the crossmember may be installed between the right and left battery side frames.

In the above-mentioned vehicle lower-portion structure, the crossmember is installed between the battery side frames. Thus, a side collision load is transmitted to the battery side frame on the counter-collision side via the crossmember, and the battery can be satisfactorily protected.

In the vehicle lower-portion structure according to the first aspect of the present disclosure, the crossmember may be configured to mount a vehicle seat, and may be configured to be removed from the battery side frames.

In the above-mentioned vehicle lower-portion structure, the crossmember can be removed from the battery side frames. Thus, the vehicle seat can be taken out from the vehicle only by removing the crossmember from the battery side frames.

In the vehicle lower-portion structure according to the first aspect of the present disclosure, a plurality of the brackets may be disposed at intervals in a vehicle front-rear direction.

In the above-mentioned vehicle lower-portion structure, a plurality of crossmembers can be mounted to the battery case with the plurality of brackets.

In the vehicle lower-portion structure according to the first aspect of the present disclosure, an anti-vibration member may be disposed in a space between the fastening portion and the upper surface of the battery case.

In the above-mentioned vehicle lower-portion structure, the anti-vibration member is disposed in the space between the fastening portion and the upper surface of the battery case. Thus, the vibration from the vehicle seat can be prevented from being input to the battery.

In the vehicle lower-portion structure according to the first aspect of the present disclosure, the bracket may have a vertical wall portion on both sides in the vehicle-width direction, the vertical wall portion may be bent along the side surface of the battery case, and the vertical wall portion may be in contact with the side surface of the battery case.

In the vehicle lower-portion structure according to the first aspect of the present disclosure, the crossmember may include an upper wall portion, and the fastener may pass through the upper wall portion.

As described above, according to the vehicle lower-portion structure of the present invention, in the structure including the crossmember extending in the vehicle-width direction, the performance of the battery can be satisfactorily maintained.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view illustrating a vehicle lower-portion structure according to an embodiment;
FIG. 2 is an enlarged sectional view illustrating, in an enlarged manner, a state in which the vehicle lower-portion structure is taken along the line 2-2 of FIG. 1;
FIG. 3 is an enlarged sectional view illustrating, in an enlarged manner, a state in which the vehicle lower-portion structure is taken along the line 3-3 of FIG. 1;
FIG. 4 is a plan view illustrating a main part of the vehicle lower-portion structure according to the embodiment, and is a view illustrating a state before crossmembers are mounted.
FIG. 5 is an enlarged sectional view corresponding to FIG. 4, illustrating a vehicle lower-portion structure according to a first modification example;
FIG. 6 is an enlarged sectional view corresponding to FIG. 3, illustrating a vehicle lower-portion structure according to a second modification example;
FIG. 7 is an enlarged sectional view corresponding to FIG. 3, illustrating a vehicle lower-portion structure according to a third modification example; and
FIG. 8 is an enlarged sectional view corresponding to FIG. 2, illustrating a vehicle lower-portion structure according to a fourth modification example.

### DETAILED DESCRIPTION OF EMBODIMENTS

A vehicle lower-portion structure according to an embodiment is described with reference to the drawings.

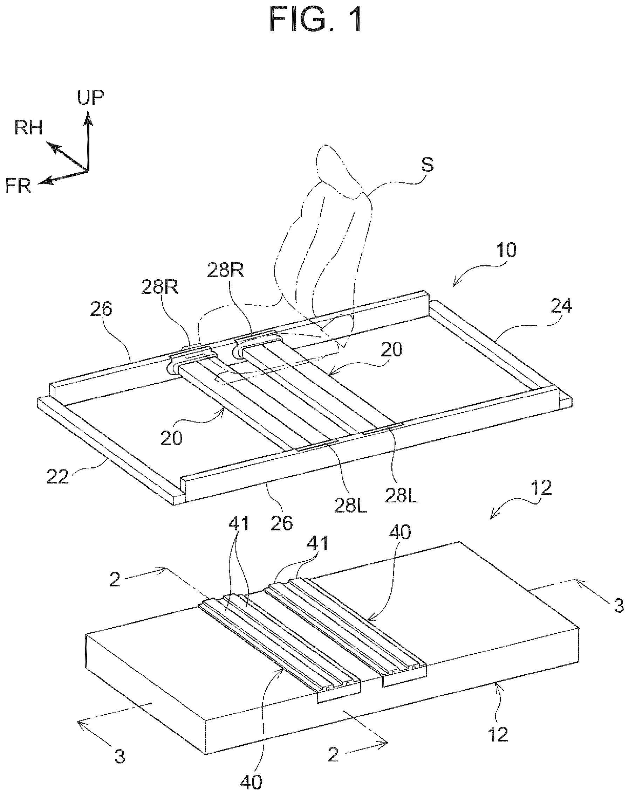

FIG. 1 is a perspective view illustrating a part of the vehicle lower-portion structure according to the embodiment. It is to be noted that an arrow FR, an arrow UP, an arrow RH, and an arrow LH in the drawings respectively indicate a vehicle front direction, a vehicle upper direction, a vehicle right direction, and a vehicle left direction in a vehicle. When the directions of front and rear, upper and lower, and right and left are used without special mention in the following description, the directions respectively indicate front and rear in a vehicle front-rear direction, upper and lower in a vehicle-height direction, and right and left in a vehicle right-left direction (width direction).

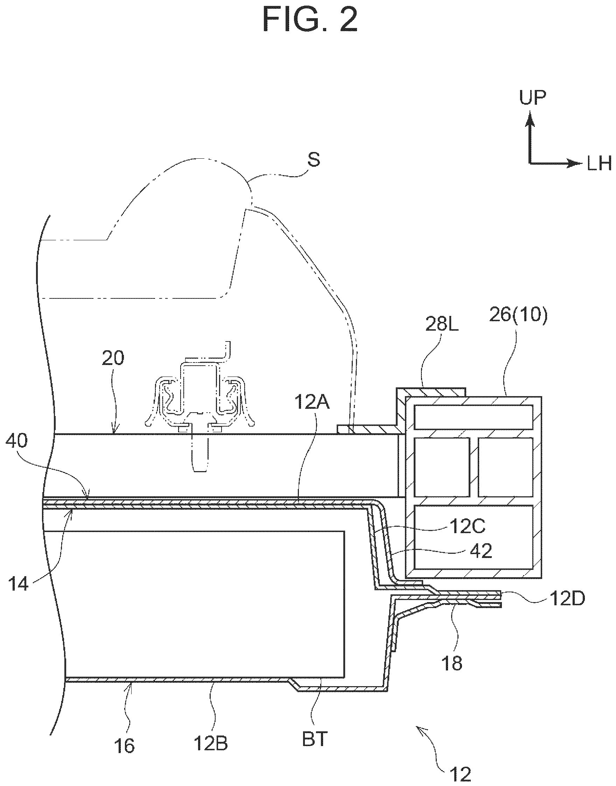

As illustrated in FIG. 1, the vehicle lower-portion structure of this embodiment includes a battery frame 10 and a battery case 12. The battery case 12 is disposed in a lower portion of the vehicle to which the vehicle lower-portion structure is applied. FIG. 2 is an enlarged sectional view illustrating, in an enlarged manner, a state in which the vehicle lower-portion structure is taken along the line 2-2 of FIG. 1. As illustrated in FIG. 2, a battery BT is accommodated inside the battery case 12. It is to be noted that the battery BT may be formed in a substantially box shape to accommodate a plurality of cells like a battery module, or may be a long rectangular-shape blade battery.

The battery case 12 includes an upper case 14 and a lower case 16, and has an upper surface 12A, a lower surface 12B, and a side surface 12C. The upper case 14 is formed in a substantially hat sectional shape in which a vehicle lower side thereof is opened, and the upper case 14 configures the upper surface 12A of the battery case 12.

The lower case 16 is formed in a substantially hat sectional shape in which a vehicle upper side thereof is opened, and the lower case 16 configures the lower surface 12B of the battery case 12. The side surface 12C of the battery case 12 includes a part extending to the vehicle lower side from both end portions of the upper surface 12A in the vehicle-width direction, and a part extending to the vehicle upper side from both end portions of the lower surface 12B in the vehicle-width direction, and a flange 12D extends from the side surface 12C to the outer side in the vehicle-width direction.

The flange 12D is formed by welding the stacked upper case 14 and lower case 16. Further, a reinforcement panel 18 is provided on the lower case 16 below the flange 12D. The reinforcement panel 18 is joined to the side surface 12C and the flange 12D of the battery case 12. It is to be noted that FIG. 1 illustrates the battery case 12 in a simplified manner and omits the illustration of the flange 12D, but, in an actual case, the flange 12D is formed over the entire circumference of the battery case 12.

Here, in this embodiment, as an example, the upper surface 12A of the battery case 12 configures a vehicle cabin floor portion. That is, the vehicle lower-portion structure of this embodiment includes no floor panel that configures a floor surface of a vehicle cabin, and the upper case 14 also serves as the floor panel. Accordingly, a carpet (not illustrated) or the like is provided on the upper surface of the upper case 14.

As illustrated in FIG. 1, crossmembers 20 are disposed above the battery case 12. Each of the crossmembers 20 is configured to have a closed sectional shape, extends in the vehicle-width direction, and is mounted on the battery frame 10.

The battery frame 10 is formed in a substantially frame shape by including a battery front frame 22, a battery rear frame 24, and a pair of right and left battery side frames 26. The battery front frame 22, the battery rear frame 24, and the battery side frames 26 may be integrally formed from a metal, or may be formed separately from each other.

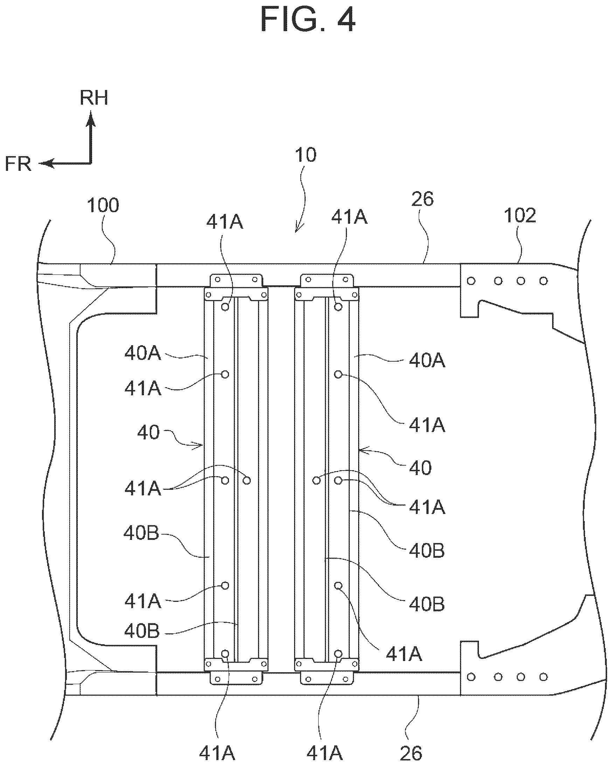

The battery front frame 22 is positioned in a vehicle front portion, and extends in the vehicle-width direction along a vehicle front end portion of the battery case 12. Further, a front module 100 configuring a front portion of the vehicle is joined to the battery front frame 22 (see FIG. 4).

The battery rear frame 24 is positioned in a vehicle rear portion of the vehicle lower-portion structure, and extends in the vehicle-width direction along a vehicle rear end portion of the battery case 12. Further, a rear module 102 configuring a rear portion of the vehicle is joined to the battery rear frame 24 (see FIG. 4).

A right side end portion of the battery front frame 22 and a right side end portion of the battery rear frame 24 are coupled in the vehicle front-rear direction by the battery side frame 26 on the right side. Further, a left side end portion of the battery front frame 22 and a left side end portion of the battery rear frame 24 are coupled in the vehicle front-rear direction by the battery side frame 26 on the left side.

The right and left battery side frames 26 are respectively provided on both sides of the battery case 12 in the vehicle-width direction, and extend in the vehicle front-rear direction along the side surface 12C of the battery case 12. Further, as illustrated in FIG. 2, the battery side frame 26 is formed in a closed sectional shape, and an internal space of the battery side frame 26 is divided by partition walls into a plurality of spaces. It is to be noted that, with the internal space of the battery side frame 26 being divided by the partition walls, an energy absorption effect at the time of side collision can be enhanced, but the partition walls are not required to be provided.

The crossmember 20 is installed between the right and left battery side frames 26. In this embodiment, as an example, two crossmembers 20 are disposed at an interval in the vehicle front-rear direction.

The crossmember 20 on the front side is disposed on a slightly vehicle front side from a center portion of the battery side frame 26 in the vehicle front-rear direction. Further, a right end portion of the crossmember 20 on the front side abuts against the battery side frame 26 on the right side, and is coupled to the battery side frame 26 with a right coupling member 28R. A left end portion of the crossmember 20 abuts against the battery side frame 26 on the left side, and is coupled to the battery side frame 26 with a left coupling member 28L.

As illustrated in FIG. 2, the left coupling member 28L is a bracket that couples the crossmember 20 and the battery side frame 26. The left coupling member 28L includes, in sectional view as viewed from the vehicle front-rear direction, a part having a substantially crank shape including a part overlapping the upper surface of the crossmember 20 and a part overlapping the upper surface of the battery side frame 26. In addition, the left coupling member 28L is joined by welding or the like to each of the crossmember 20 and the battery side frame 26. It is to be noted that the right coupling member 28R has a shape that is bilaterally symmetrical with the left coupling member 28L.

The crossmember 20 on the rear side is disposed at the center portion of the battery side frame 26 in the vehicle-width direction. Further, a right end portion of the crossmember 20 on the rear side abuts against the battery side frame 26 on the right side, and is coupled to the battery side frame 26 with a right coupling member 28R. A left end portion of the crossmember 20 abuts against the battery side frame 26 on the left side, and is coupled to the battery side frame 26 with a left coupling member 28L.

A vehicle seat S is fixed to the front and rear crossmembers 20. It is to be noted that the crossmember 20 on the front side and the crossmember 20 on the rear side have similar configurations, and hence only the crossmember 20 on the front side is described in the following description, and the description of the crossmember 20 on the rear side is omitted.

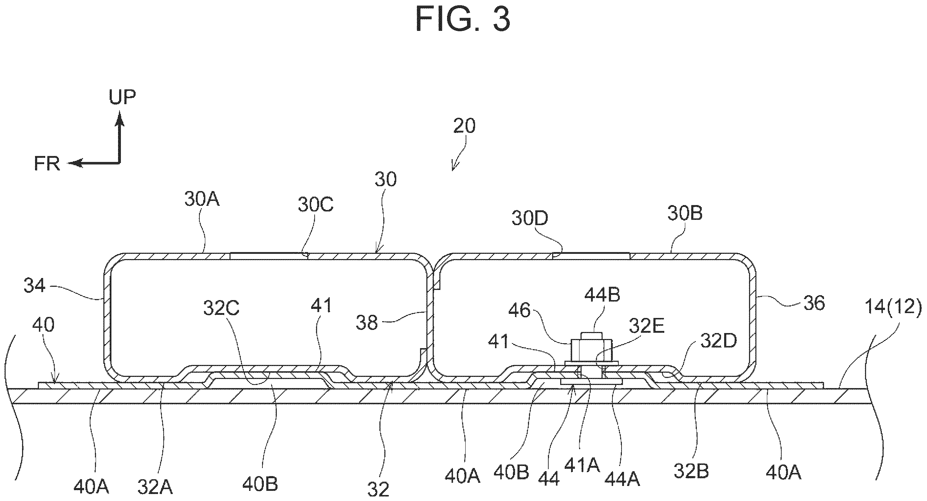

FIG. 3 is an enlarged sectional view illustrating, in an enlarged manner, a state in which the vehicle lower-portion structure is taken along the line 3-3 of FIG. 1. As illustrated in FIG. 3, the crossmember 20 is formed to a shape in which two closed sections are arrayed in the vehicle front-rear direction as viewed from the vehicle-width direction. Specifically, the crossmember 20 includes an upper wall portion 30, a lower wall portion 32, a front wall portion 34, a rear wall portion 36, and a partition wall portion 38.

The upper wall portion 30 extends in the vehicle front-rear direction and the vehicle-width direction, and includes a front upper wall portion 30A on the front side and a rear upper wall portion 30B on the rear side across the partition wall portion 38. Further, the lower wall portion 32 extends in the vehicle front-rear direction and the vehicle-width direction, and includes a front lower wall portion 32A on the front side and a rear lower wall portion 32B on the rear side across the partition wall portion 38.

The front wall portion 34 extends in the vehicle-height direction and the vehicle-width direction, and provides vertical coupling between a front end of the front upper wall portion 30A and a front end of the front lower wall portion 32A. The rear wall portion 36 extends in the vehicle-height direction and the vehicle-width direction, and provides vertical coupling between a rear end of the rear upper wall portion 30B and a rear end of the rear lower wall portion 32B.

The partition wall portion 38 extends in the vehicle-height direction and the vehicle-width direction, and provides vertical coupling between the upper wall portion 30 and the lower wall portion 32. Accordingly, the partition wall portion 38 divides the internal space of the crossmember 20 into front and rear sections.

Here, in this embodiment, the crossmember 20 is formed by pressing and bending one steel sheet. Specifically, the crossmember 20 is formed from a steel sheet in which the front lower wall portion 32A, the front wall portion 34, the front upper wall portion 30A, the partition wall portion 38, the rear lower wall portion 32B, the rear wall portion 36, and the rear upper wall portion 30B are continuous in the stated order.

Further, the front lower wall portion 32A of the crossmember 20 has a recessed portion 32C formed at a position corresponding to a fastening portion 40B to be described later, and the rear lower wall portion 32B has a recessed portion 32D formed at a position corresponding to a fastening portion 40B to be described later. The recessed portion 32C is formed in a center part of the front lower wall portion 32A in the vehicle front-rear direction, and the recessed portion 32D is formed in a center part of the rear lower wall portion 32B in the vehicle front-rear direction.

As illustrated in FIG. 1 and FIG. 3, brackets 40 are provided between the battery case 12 and the crossmembers 20. Two brackets 40 are provided at an interval in the vehicle-width direction, and are each provided at a position corresponding to the crossmember 20. The bracket 40 on the front side and the bracket 40 on the rear side have similar configurations, and hence the bracket 40 on the front side is described in the following description, and the description of the bracket 40 on the rear side is omitted.

The bracket 40 is formed in a substantially long plate shape having the vehicle-width direction as the longitudinal direction. Further, as illustrated in FIG. 3, the bracket 40 includes a joining portion 40A joined to the upper surface of the battery case 12, and the fastening portion 40B to which a bolt 44 that is a fastener is mounted.

The joining portion 40A is formed in a substantially flat plate shape and overlaps the upper surface of the upper case 14. The joining portion 40A is joined to the upper case 14 by spot welding or the like. Further, the joining portion 40A is provided at three locations of the bracket 40, that is, a front end portion, a rear end portion, and a center portion in the front-rear direction, and the fastening portion 40B is formed between the front end portion and the center portion of the bracket 40. Further, the fastening portion 40B is also formed between the rear end portion and the center portion of the bracket 40.

The fastening portion 40B includes a protrusion bead 41 extending in the vehicle-width direction. Accordingly, a space is provided between the fastening portion 40B and the battery case 12. As illustrated in FIG. 1, the protrusion bead 41 extends up to end portions of the upper surface of the upper case 14. Further, at both end portions of the bracket 40, both end portions in the vehicle-width direction of the battery case 12 are bent along the side surface 12C of the battery case 12.

As illustrated in FIG. 2, the end portion of the bracket 40 in the vehicle-width direction forms a vertical wall portion 42 bent along the side surface 12C of the battery case 12. Further, the end portion of the bracket 40 in the vehicle-width direction is bent to the outer side in the vehicle-width direction from a lower end portion of the vertical wall portion 42 along the flange 12D of the battery case 12, and is joined to the flange 12D by spot welding or the like.

Here, a gap is provided between the vertical wall portion 42 of the bracket 40 and the side surface 12C of the battery case 12. Accordingly, in this embodiment, the bracket 40 is joined at a position of the upper surface and the flange 12D of the battery case 12, and the bracket 40 and the side surface 12C of the battery case 12 are not joined.

As illustrated in FIG. 3, the bolt 44 is inserted through the fastening portion 40B of the bracket 40. The bolt 44 includes a head portion 44A and a shaft portion 44B, and the head portion 44A of the bolt 44 is positioned in a space between the fastening portion 40B of the bracket 40 and the upper surface 12A of the battery case 12.

As an example of this embodiment, the head portion 44A of the bolt 44 is joined to the lower surface in the fastening portion 40B of the bracket 40 by welding or the like, and the thickness of the head portion 44A of the bolt 44 is thinner than the height dimension of the space between the fastening portion 40B of the bracket 40 and the upper surface 12A of the battery case 12. Accordingly, the head portion 44A of the bolt 44 is not in contact with the upper surface 12A of the battery case 12, and a slight gap is provided between the head portion 44A and the upper surface 12A of the battery case 12.

The shaft portion 44B of the bolt 44 extends to the vehicle upper side from the head portion 44A. Further, the shaft portion 44B is inserted through an insertion hole 41A formed in the protrusion bead 41 of the bracket 40 and an insertion hole 32E formed in the lower wall portion 32 of the crossmember 20. Further, a distal end of the shaft portion 44B of the bolt 44 is screwed into a nut 46 within a section of the crossmember 20, and the bracket 40 and the crossmember 20 are fastened by the bolt 44 and the nut 46. It is to be noted that the front upper wall portion 30A and the rear upper wall portion 30B of the crossmember 20 respectively have a working hole 30C and a working hole 30D formed therein, and the nut 46 is screwed onto the bolt 44 by putting a tool within the section of the crossmember 20 from the working hole 30C and the working hole 30D.

FIG. 4 is a plan view illustrating a main part of the vehicle lower-portion structure according to the embodiment, and is a view illustrating a state before the crossmembers 20 are mounted. As illustrated in FIG. 4, in this embodiment, as an example, six insertion holes 41A are formed in each of the brackets 40, and the bolts 44 are mounted into the insertion holes 41A.

In the bracket 40 on the front side, five insertion holes 41A are formed in the protrusion bead 41 on the front side at intervals in the vehicle-width direction. Further, in the protrusion bead 41 on the rear side in the bracket 40 on the front side, one insertion hole 41A is formed in a center portion in the vehicle-width direction.

In the bracket 40 on the rear side, one insertion hole 41A is formed in a center portion of the protrusion bead 41 on the front side in the vehicle-width direction. Further, in the protrusion bead 41 on the rear side in the bracket 40 on the rear side, five insertion holes 41A are formed at intervals in the vehicle-width direction. In addition, the positions of the insertion holes 41A are set at positions that do not overlap a seat rail of the vehicle seat S in plan view.

### (Actions)

Next, actions of the vehicle lower-portion structure according to this embodiment are described.

As illustrated in FIG. 1, in the vehicle lower-portion structure according to this embodiment, the battery case 12 accommodating the battery BT is disposed in the lower portion of the vehicle, and the crossmembers 20 extending in the vehicle-width direction are disposed on the vehicle upper side from the battery case 12. In this manner, a collision load input at the time of side collision of the vehicle can be transmitted to the counter-collision side by each of the crossmembers 20.

Further, each of the brackets 40 is provided between the battery case 12 and the crossmember 20, and the bracket 40 includes the joining portion 40A joined to the upper surface 12A of the battery case 12 and the fastening portion 40B having mounted thereon the bolt 44 to be inserted through the crossmember 20. As described above, with the fastening portion 40B being provided in the bracket 40 and the bolt 44 being mounted to the fastening portion 40B and inserted through the crossmember 20, it is not required to fasten the battery case 12 and the crossmember 20 directly with the bolt 44. As a result, it is not required to form a hole in the battery case 12, and the performance of the battery BT can be satisfactorily maintained.

In particular, in this embodiment, the head portion 44A of the bolt 44 is provided in the space between the fastening portion 40B and the upper surface of the battery case 12. In this manner, the bolt 44 can be prevented from coming off from the bracket 40, and the fastening state of the crossmember 20 can be satisfactorily maintained. Further, the shaft portion 44B of the bolt 44 is inserted through the bracket 40 and the crossmember 20, and hence the head portion 44A of the bolt 44 and the nut 46 can sandwich the bracket 40 and the crossmember 20. Thus, the bracket 40 and the crossmember 20 can be firmly fixed.

Moreover, in this embodiment, the recessed portion 32C and the recessed portion 32D are formed in the lower wall portion 32 of the crossmember 20, and the fastening portion 40B is caused to enter the recessed portions 32C, 32D. In this manner, a part of the crossmember 20 other than the recessed portions 32C, 32D can be caused to adhere to the bracket 40 in surfaces.

Still further, in this embodiment, as illustrated in FIG. 2, both end portions of the bracket 40 in the vehicle-width direction are bent along the side surface 12C of the battery case 12, and hence the bracket 40 can reinforce the side surface of the battery case 12.

In particular, in this embodiment, the bracket 40 extends up to the flange 12D of the battery case 12, and hence can reinforce the battery case 12 from the side surface to the flange 12D. Further, a gap is provided between the side surface 12C of the battery case 12 and the bracket 40, and hence the gap collapses with the collision load input at the time of side collision to absorb at least a part of the collision load. As a result, as compared to a structure having no gap between the side surface 12C of the battery case 12 and the bracket 40, protection performance for the battery BT at the time of side collision is improved.

Further, in this embodiment, the upper surface of the battery case 12 configures the vehicle cabin floor portion, and hence it is not required to separately provide a floor panel. As a result, as compared to a structure including a floor panel, the number of components and the number of assembly steps can be reduced.

Moreover, as illustrated in FIG. 1 and FIG. 3, in this embodiment, the protrusion bead 41 is formed in the bracket 40. In this manner, the rigidity of the fastening portion 40B in the bracket 40 is increased, and the bracket is prevented from buckling at the time of side collision. Further, the protrusion bead 41 provides a ridgeline extending in the vehicle-width direction, and hence the vehicle collision load can be transmitted along the ridgeline.

Still further, in this embodiment, the crossmember 20 is installed between the battery side frames 26, and hence the side collision load is transmitted to the battery side frame 26 on the counter-collision side via the crossmember 20, and the battery BT can be satisfactorily protected. In particular, the plurality of brackets 40 mounts the plurality of crossmembers 20 to the battery case 12, and hence the protection performance for the battery BT is improved.

### First Modification Example

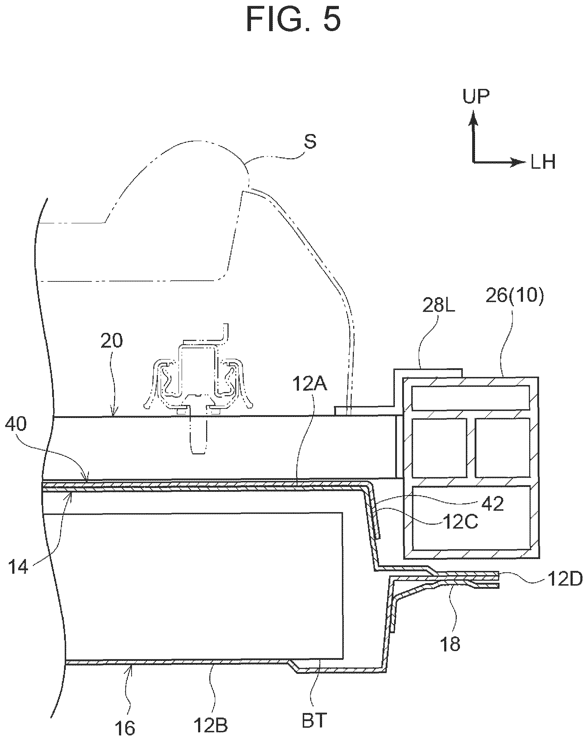

Next, a first modification example of the vehicle lower-portion structure is described with reference to FIG. 5. It is to be noted that components similar to those of the embodiment are denoted by the same reference symbols, and description thereof is omitted as appropriate.

FIG. 5 is an enlarged sectional view corresponding to FIG. 4, illustrating the vehicle lower-portion structure according to the first modification example. As illustrated in FIG. 5, in the first modification example of the vehicle lower-portion structure, the shape of the vertical wall portion 42 of the bracket 40 is different.

In this modification example, on both sides of the bracket 40 in the vehicle-width direction, the vertical wall portion 42 bent along the side surface 12C of the battery case 12 is formed, and the vertical wall portion 42 is in contact with the side surface 12C of the battery case 12. In addition, the lower end of the vertical wall portion 42 is positioned at the side surface of the battery case 12, and the vertical wall portion 42 and the side surface 12C of the battery case 12 are joined.

In this modification example, the bracket 40 does not extend up to the flange 12D of the battery case 12, and hence the flange 12D can be directly joined to the battery side frame 26. It is to be noted that, from the viewpoint of protecting the battery BT at the time of side collision, as in the embodiment, a gap is preferably provided between the vertical wall portion 42 and the side surface 12C.

### Second Modification Example

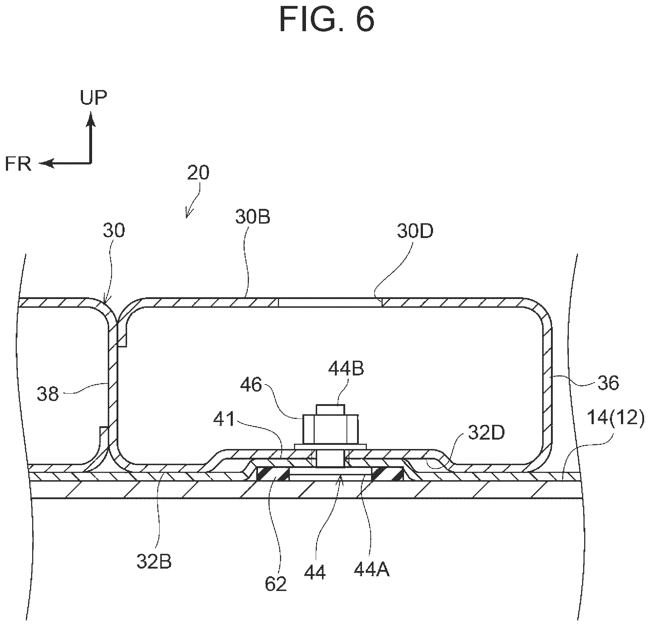

Next, a second modification example of the vehicle lower-portion structure is described with reference to FIG. 6. It is to be noted that components similar to those of the embodiment are denoted by the same reference symbols, and description thereof is omitted as appropriate.

FIG. 6 is an enlarged sectional view corresponding to FIG. 3, illustrating the vehicle lower-portion structure according to the second modification example. As illustrated in FIG. 6, in the second modification example of the vehicle lower-portion structure, an anti-vibration member 62 is provided in a space between the protrusion bead 41 and the upper surface 12A of the battery case 12.

The anti-vibration member 62 is formed in a substantially circular ring shape by, for example, rubber and the like, and is formed to have a thickness equivalent to a gap between the protrusion bead 41 and the upper case 14. In addition, the upper surface of the anti-vibration member 62 is in contact with the protrusion bead 41, and the lower surface of the anti-vibration member 62 is in contact with the upper case 14.

In this modification example, the anti-vibration member 62 can absorb at least a part of the vibration transmitted between the battery case 12 and the crossmember 20.

### Third Modification Example

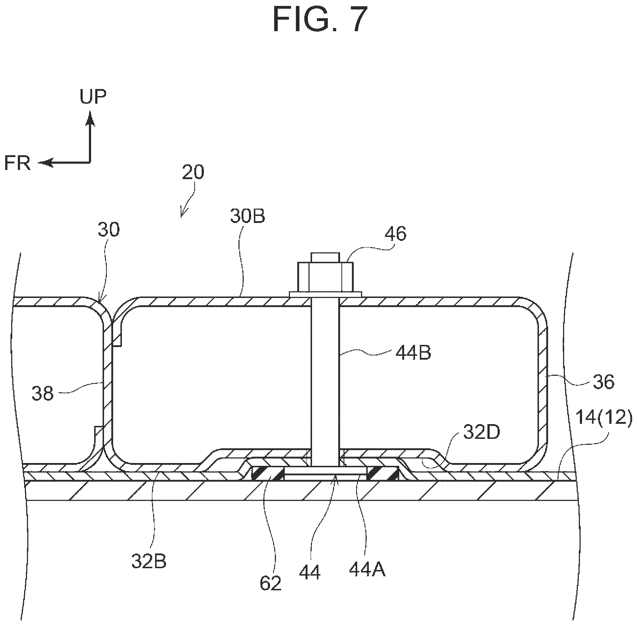

Next, a third modification example of the vehicle lower-portion structure is described with reference to FIG. 7. It is to be noted that components similar to those of the embodiment are denoted by the same reference symbols, and description thereof is omitted as appropriate.

FIG. 7 is an enlarged sectional view corresponding to FIG. 3, illustrating the vehicle lower-portion structure according to the third modification example. As illustrated in FIG. 7, in the third modification example of the vehicle lower-portion structure, similarly to the second modification example, the anti-vibration member 62 is provided in the space between the protrusion bead 41 and the upper surface 12A of the battery case 12.

Further, in this modification example, the bolt 44 serving as the fastener passes through the upper wall portion 30 of the crossmember 20. Specifically, the shaft portion 44B of the bolt 44 is formed to be longer than that in the embodiment, and passes through the rear upper wall portion 30B of the crossmember 20. In addition, the nut 46 is screwed from above.

In this modification example, it is not required to form the working hole 30D in the upper wall portion 30 of the crossmember 20. Further, it is only required to form a hole with a size through which the shaft portion 44B of the bolt 44 is insertable, and hence the crossmember 20 can be prevented from being reduced in rigidity.

### Fourth Modification Example

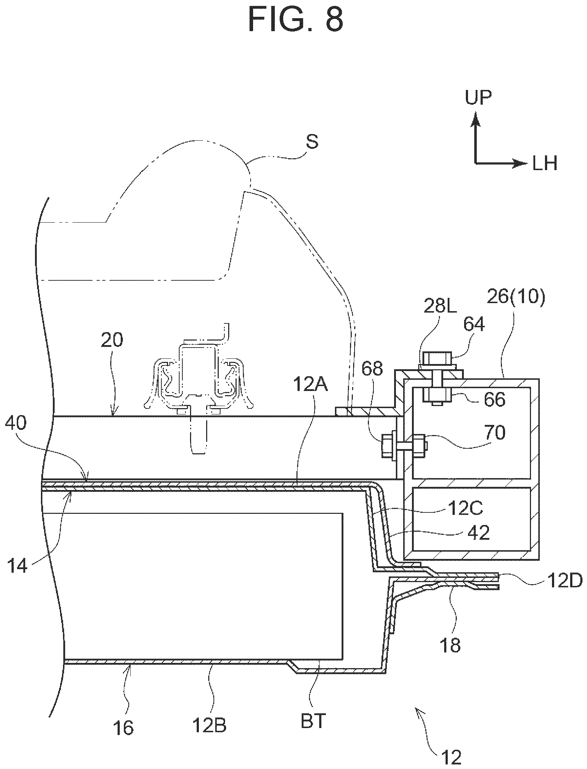

Next, a fourth modification example of the vehicle lower-portion structure is described with reference to FIG. 8. It is to be noted that components similar to those of the embodiment are denoted by the same reference symbols, and description thereof is omitted as appropriate.

FIG. 8 is an enlarged sectional view corresponding to FIG. 2, illustrating the vehicle lower-portion structure according to the fourth modification example. As illustrated in FIG. 8, in the fourth modification example of the vehicle lower-portion structure, the crossmember 20 is structured to be removable from the battery side frame 26.

Specifically, the left end portion of the crossmember 20 abuts against the battery side frame 26 on the left side, and is coupled to the battery side frame 26 with the left coupling member 28L. The left coupling member 28L is formed in a shape similar to that in the embodiment, and the left coupling member 28L and the upper surface of the battery side frame 26 are mechanically fastened by a bolt 64 and a nut 66.

Further, the left coupling member 28L and the side surface of the battery side frame 26 are mechanically fastened by a bolt 68 and a nut 70. Meanwhile, the left coupling member 28L and the crossmember 20 are joined by spot welding or the like. It is to be noted that, although not illustrated, the right coupling member 28R is similarly mechanically fastened to the crossmember 20.

In this modification example, the left coupling member 28L and the right coupling member 28R are each mechanically fastened to the crossmember 20, and hence the crossmember 20 can be removed from the battery side frame 26 by unscrewing the bolts 64, 68 and the like. Here, the crossmember 20 has the vehicle seat S mounted thereon, and hence, when the crossmember 20 is removed, the vehicle seat S can be removed together with the crossmember 20. Further, when a plurality of bolt holes is formed in the battery side frame 26 along the vehicle front-rear direction, the crossmember 20 can be fastened at different positions, and the position of the vehicle seat S can be changed.

Description has been given above about the vehicle lower-portion structure according to the present invention, but, as a matter of course, the present invention can be carried out in various aspects without departing from the gist of the present invention. For example, in the embodiment and the modification examples, as illustrated in FIG. 3, the fastening portion 40B is formed to include the protrusion bead 41 extending in the vehicle-width direction, but the present invention is not limited thereto, and the fastening portion may be configured in a different shape. As an example, a fastening portion may be configured to include a swelled part in a substantially circular shape in plan view. In this case, only a part to which the bolt 44 is mounted may have the swelled shape.

Further, in the embodiment and the modification examples, the bolt 44 is adopted as the fastener, but the present invention is not limited thereto. For example, another fastener that provides mechanical fastening, such as a rivet or a clip, may be used.

Moreover, in the embodiment and the modification examples, as illustrated in FIG. 4, the bracket 40 is formed to a long plate shape that is continuous from the right end to the left end of the battery case 12, but the present invention is not limited thereto. For example, a plurality of brackets may be disposed at intervals in the vehicle-width direction.

Regarding the above-mentioned embodiment, the following supplementary notes are disclosed.

A vehicle lower-portion structure according to a first aspect includes: a battery case disposed in a lower portion of a vehicle, the battery case accommodating a battery; a crossmember disposed on a vehicle upper side from the battery case, the crossmember extending in a vehicle-width direction; a bracket provided between the battery case and the crossmember, the bracket including a joining portion joined to an upper surface of the battery case and a fastening portion having an insertion hole; and a fastener provided through the insertion hole to fix the crossmember and the battery case.

In the vehicle lower-portion structure according to the first aspect, the fastening portion may protrude to the vehicle upper side from the joining portion, and the fastener may have a part disposed in a space between the fastening portion and the upper surface of the battery case.

In the vehicle lower-portion structure according to the first aspect, the crossmember may have a closed sectional shape, and the crossmember may have a lower wall portion provided with a recessed portion at a position corresponding to the fastening portion.

In the vehicle lower-portion structure according to the first aspect, the battery case may include a side surface extending to a vehicle lower side from both end portions of the upper surface in the vehicle-width direction, and the bracket may extend in the vehicle-width direction, and an outer side of the bracket in the vehicle-width direction may be bent along the side surface.

In the vehicle lower-portion structure according to the first aspect, the battery case may include a flange extending from the side surface to an outer side in the vehicle-width direction, and the bracket may be joined to the flange.

In the vehicle lower-portion structure according to the first aspect, a gap may be provided between the bracket and the side surface.

In the vehicle lower-portion structure according to the first aspect, the upper surface of the battery case may configure a vehicle cabin floor portion.

In the vehicle lower-portion structure according to the first aspect, the fastening portion may include a protrusion bead extending in the vehicle-width direction.

In the vehicle lower-portion structure according to the first aspect, the fastener may be a bolt including a head portion and a shaft portion, the head portion may be disposed in a space between the fastening portion and the upper surface of the battery case, and the shaft portion may be provided through the bracket and the crossmember.

The vehicle lower-portion structure according to the first aspect, may further include a pair of right and left battery side frames provided on both sides of the battery case in the vehicle-width direction, the right and left battery side frames extending in a vehicle front-rear direction along the side surface, in which the crossmember is connected to the right and left battery side frames.

In the vehicle lower-portion structure according to the first aspect, the crossmember may be configured to mount a vehicle seat, and is configured to be removed from the battery side frames.

In the vehicle lower-portion structure according to the first aspect, a plurality of the brackets may be disposed at intervals in a vehicle front-rear direction.

In the vehicle lower-portion structure according to the first aspect, an anti-vibration member may be disposed in a space between the fastening portion and the upper surface of the battery case.

In the vehicle lower-portion structure according to the first aspect, the bracket may have a vertical wall portion on both sides in the vehicle-width direction, and the vertical wall portion may be bent along the side surface of the battery case, and the vertical wall portion may be in contact with the side surface of the battery case.

In the vehicle lower-portion structure according to the first aspect, the crossmember may include an upper wall portion, and the fastener may pass through the upper wall portion.

## Claims

1. A vehicle lower-portion structure comprising:
a battery case (12) disposed in a lower portion of a vehicle, the battery case (12) accommodating a battery;
a crossmember (20) disposed on a vehicle upper side from the battery case (12), the crossmember (20) extending in a vehicle-width direction;
a bracket (40) provided between the battery case (12) and the crossmember (20), the bracket (40) including a joining portion (40A) joined to an upper surface (12A) of the battery case (12) and a fastening portion (40B) having an insertion hole (41A); and
a fastener (44) provided through the insertion hole (41A) to fix the crossmember (20) and the battery case (12).

2. The vehicle lower-portion structure according to claim 1, wherein
the fastening portion (40B) protrudes to the vehicle upper side from the joining portion (40A), and
the fastener (44) has a part disposed in a space between the fastening portion (40B) and the upper surface (12A) of the battery case (12).

3. The vehicle lower-portion structure according to claim 2, wherein
the crossmember (20) has a closed sectional shape, and
the crossmember (20) has a lower wall portion (32) provided with a recessed portion (32C; 32D) at a position corresponding to the fastening portion (40B).

4. The vehicle lower-portion structure according to any one of claims 1 to 3, wherein
the battery case (12) includes a side surface (12C) extending to a vehicle lower side from both end portions of the upper surface (12A) in the vehicle-width direction, and
the bracket (40) extends in the vehicle-width direction, and an outer side of the bracket (40) in the vehicle-width direction is bent along the side surface (12C).

5. The vehicle lower-portion structure according to claim 4, wherein
the battery case (12) includes a flange (12D) extending from the side surface (12C) to an outer side in the vehicle-width direction, and
the bracket (40) is joined to the flange (12D).

6. The vehicle lower-portion structure according to claim 5, wherein a gap is provided between the bracket (40) and the side surface (12C).

7. The vehicle lower-portion structure according to any one of claims 1 to 6, wherein the upper surface (12A) of the battery case (12) configures a vehicle cabin floor portion.

8. The vehicle lower-portion structure according to claim 2 taken in combination with any one of claims 1 to 7, wherein the fastening portion (40B) includes a protrusion bead (41) extending in the vehicle-width direction.

9. The vehicle lower-portion structure according to claim 2 taken in combination with any one of claims 1 to 8, wherein
the fastener (44) is a bolt including a head portion (44A) and a shaft portion (44B),
the head portion (44A) is disposed in a space between the fastening portion (40B) and the upper surface (12A) of the battery case (12), and
the shaft portion (44B) is provided through the bracket (40) and the crossmember (20).

10. The vehicle lower-portion structure according to claim 4 taken in combination with any one of claims 1 to 9, further comprising a pair of right and left battery side frames (26) provided on both sides of the battery case (12) in the vehicle-width direction, the right and left battery side frames (26) extending in a vehicle front-rear direction along the side surface (12C), wherein
the crossmember (20) is connected to the right and left battery side frames (26).

11. The vehicle lower-portion structure according to claim 10, wherein the crossmember (20) is configured to mount a vehicle seat (S), and is configured to be removed from the battery side frames (26).

12. The vehicle lower-portion structure according to any one of claims 1 to 11, wherein a plurality of the brackets (40) is disposed at intervals in a vehicle front-rear direction.

13. The vehicle lower-portion structure according to claim 2 taken in combination with any one of claims 1 to 12, wherein an anti-vibration member (62) is disposed in a space between the fastening portion (40B) and the upper surface (12A) of the battery case (12).

14. The vehicle lower-portion structure according to claim 4 taken in combination with any one of claims 1 to 13, wherein
the bracket (40) has a vertical wall portion (42) on both sides in the vehicle-width direction, and the vertical wall portion (42) is bent along the side surface (12C) of the battery case (12), and
the vertical wall portion (42) is in contact with the side surface (12C) of the battery case (12).

15. The vehicle lower-portion structure according to any one of claims 1 to 14, wherein
the crossmember (20) includes an upper wall portion (30), and
the fastener (44) passes through the upper wall portion (30).
